# EUROPEAN PATENT SPECIFICATION

(11) **EP 3 221 254 B1**
(45) Date of publication and mention of the grant of the patent: **17.02.2021**
(21) Application number: 15797975.8
(22) Date of filing: 17.11.2015
(51) Int. Cl.: B67D 9/02, B63B 27/34, F16L 29/00

(54) **LOADING ASSEMBLY FOR CONVEYING A PRESSURIZED GAS STREAM AND A SWITCHING SYSTEM FOR USE IN SUCH A LOADING ASSEMBLY**
LADEANORDNUNG ZUM FÖRDERN EINES DRUCKGASSTROMS UND SCHALTSYSTEM ZUR VERWENDUNG IN SOLCH EINER LADEANORDNUNG
ENSEMBLE DE CHARGEMENT DESTINÉ À TRANSPORTER UN FLUX DE GAZ SOUS PRESSION ET SYSTÈME DE COMMUTATION DESTINÉ À ÊTRE UTILISÉ DANS UN TEL ENSEMBLE DE CHARGEMENT

(30) Priority: 19.11.2014 EP 14193774
(43) Date of publication of application: 27.09.2017
(73) Proprietor: Shell Internationale Research Maatschappij B.V., 2596 HR The Hague (NL)
(72) Inventor: VEGA PEREZ, Pablo Antonio, NL-2288 GK Rijswijk (NL)
(74) Representative: Shell Legal Services IP
(86) International application number: PCT/EP2015/076771
(87) International publication number: WO 2016/079092

(56) References cited:
- WO-A1-03/004925
- WO-A1-03/054435
- WO-A1-2014/155358
- DE-U1- 8 809 509
- FR-A1- 2 572 786
- FR-A1- 2 966 553

## Description

### TECHNICAL FIELD

In a first aspect, the present invention relates to a loading assembly for conveying a pressurized gas stream from a floating structure to an other structure. In another aspect, the present invention relates to a switching system for use in a such a loading assembly.

### BACKGROUND

The need for transferring pressurized gas between a floating structure and another structure (e.g. a floating, on-shore or gravity based off-shore structure) may for instance arise if one of the structures comprises a gas processing unit, while the other contains either a gas consumer, a gas producer, or both. In the description below, it is assumed for the sake of illustration that the floating structure is the one that comprises such a gas processing unit, while the other structure has the consumer and/or the producer of gas. However, this is not a fixed requirement.

A pressurized gas may be transferred between the floating structure and the another structure by means of a so-called loading assembly. In essence, such loading assembly comprises a gas conduit that extends between the floating structure and the other structure, to convey a pressurized gas stream, such as a pressurized natural gas stream, between the two structures. If the loading assembly is adapted to convey pressurized gas, such loading assembly can for instance be used to off-load (discharge) the regasified gas from a floating gasification unit (or a floating storage and gasification unit), or to load pressurized natural gas onto a floating gas processing unit such as a floating liquefaction unit (or a floating liquefaction and storage unit). Suitably, although this is not a requirement of the present invention, the gas conduit is supported on a loading arm. A number of companies, including FMC Technologies inc., Emco Wheaton and possibly others, manufacture and sell such loading arms for transferring pressurized gas.

Loading assemblies for pressurized (natural) gas should not be confused with loading assemblies such as described in e.g. US pre-grant patent application publication No. 2006/0156744, which are designed to transfer the cryogenic liquid LNG. Transfer of (cryogenic) liquids is usually done under low pressure (lower than 5 barg) and thus the rating of connectors is different than for pressurized gas.

DE 88 09 509 U1 discloses a drift-safety system having a quick release coupling for the transfer of fluids between a vessel and a land station or vice versa. The system comprises loading arms having a limit switch. An associated electrical control drives solenoid valves between pressure accumulators and hydraulic systems for the decoupling of the quick release coupling and to actuate the locking of respective loading arms against each other. Each hydraulic system has its own pressure accumulator.

Conveying pressurized (natural) gas introduces additional risks compared to conveying liquid, as gas is compressible and pressurized gas thus stores much higher potential pressure energy, which entails high safety risks. A liquid is incompressible and thus when (unintentionally) released, the pressure drops instantantly without significant change of volume and thus without major consequences. However, when a pressurized gas is released (unintentionally), it will expand and thereby release energy which can have devastating effects, in particular in when the gas was at a high pressure, as is typical for this industry (e.g. 80 bar).

Systems and methods for dockside regasification of liquefied natural gas (LNG) are described in US pre-grant publication No. 2010/0263389. In these systems and methods, LNG may be provided from an LNG carrier to a regasification vessel. The LNG is regasified on the regasification vessel, and the regasified natural gas discharged with a high pressure arm to shore. A first end of the high pressure arm may include a quick release system involving an emergency disconnection coupler (EDC). The EDC may be triggered to release the FSRU from the arm if the position of the high pressure arm exceeds one or more preset parameters of its allowable operating envelope in any direction.

However, there is a risk of uncontrolled loss of containment if the arm is not depressurized before releasing the EDC. Furthermore, there is a risk that the EDC is not correctly released on a demand scenario, for instance due to do a loss of power or mechanical/hydraulic failure.

An example of an ERC is provided in prior European patent application 13189337.2 filed in the name of the present applicant. This document falls within the terms of Art. 54(3) EPC.

According to this patent document there is provided a loading assembly for conveying a pressurized gas stream between a floating structure and another structure that is located adjacent to the floating structure, the loading assembly comprising:
- a gas conduit that extends between the floating structure and the other structure, to convey a pressurized gas stream between the two structures;
- an Emergency Disconnection Coupler configured in the gas conduit for establishing a selectively connectable and disconnectable gas connection between the floating structure and the other structure through the gas conduit, wherein gas present in the gas connection has a gas pressure, and wherein the Emergency Disconnection Coupler comprises an engagement mechanism that is selectively switchable between a locked position and an unlocked position, whereby in said locked position the gas connection is established and whereby in said unlocked position the gas connection is interrupted whereby the engagement mechanism physically disengages when the engagement mechanism is in the unlocked position;
- an emergency disconnect power assembly functionally coupled to the engagement mechanism to drive the switching of the engagement mechanism;
- a switching system arranged between the emergency disconnect power assembly and the engagement mechanism, wherein the switching system is configured to control the switching of the engagement mechanism in the emergency disconnection coupler between the locked position and the unlocked position, wherein the switching system is subject to two distinct fail-safe regimes contingent upon the internal gas pressure in the gas connection: a fail-unlocked regime when the internal gas pressure in the gas connection is below a preselected override threshold value, which sets the switching system to unlock the engagement mechanism upon power loss, and a fail-locked regime which sets the switching system to lock the engagement mechanism when the internal gas pressure in the gas connection is at or above the preselected override threshold value.

The switching system is thus provided for controlling switching of the engagement mechanism in the Emergency Disconnection Coupler between a locked position and an unlocked position (in either direction). The switching system is subject to two distinct fail-safe regimes: one which inherently instructs for release of the Emergency Disconnection Coupler upon power loss, and one which inherently precludes release of the Emergency Disconnection Coupler when there is pressurized gas in the gas connection. The latter overrides the earlier mentioned.

The switching system may comprise a selection switch and a pressure gate comprising an override switch. The selection switch has an open state and a closed state. Upon selecting the open state the engagement mechanism is instructed to assume the unlocked position. Upon selecting the closed state the engagement mechanism is instructed to assume the locked position. The selection switch is of fail-open type. However, the selection switch can be overridden by the pressure gate.

The term fail-open is used in this text to indicate that in case of failure in the actuation or operation of the item, it is biased to assume a position which corresponds to an open state of the coupling device.

A further example is provided by prior European patent application 13170152.6 filed in the name of the present applicant. This document falls within the terms of Art. 54(3) EPC.

It is an object of the present invention to provide a loading assembly for conveying a pressurized gas stream with an improved reliability. It is a further object to provide a switching system for use in such a loading assembly with an improved reliability and/or higher spurious fault tolerance.

The term 'comprising' is used in this text to indicate that all the enlisted elements are encompassed without excluding the presence of additional non-named elements.

According to an aspect of the invention there is provided a loading assembly for conveying a pressurized gas stream between a floating structure and an other structure, the loading assembly comprising:
- a first gas conduit (1) mounted on the floating structure or the other structure,
- a coupling device (3) which is switchable between a closed state and an open state, wherein in the closed state the coupling device (3) couples the first gas conduit (1) and a second gas conduit (2) mounted on the other of the floating structure or the other structure to create a gas connection between the first and second gas conduit (1, 2) to enable conveying a pressurized gas stream between the two structures, wherein gas present in the gas connection has a gas pressure and wherein in the open state coupling between the first and second gas conduits (1, 2) is released,
- a hydraulic actuator (4) mechanically coupled to the coupling device (3) to move the coupling device (3) between the closed and open state, the hydraulic actuator (4) comprising a first side (41) and a second side (42);
- a high pressure hydraulic fluid source (5) providing hydraulic fluid to the hydraulic actuator (4) and a low pressure hydraulic fluid reservoir (6) receiving hydraulic fluid from the hydraulic actuator (4),
- a switching system (7) arranged between the high pressure hydraulic fluid source (5), the low pressure hydraulic fluid reservoir (6) and the hydraulic actuator (4), wherein the switching system (7) comprises a pressure-to-close line (8) fluidly connected to the first side (41) and a pressure-to-open line (9) fluidly connected to the second side (42), wherein the switching system (7) is arranged to move the coupling device (3) to the closed state by connecting the high pressure hydraulic fluid source (5) to the first side (41) of the hydraulic actuator (4) via the pressure-to-close line (8) and connecting the low pressure hydraulic fluid reservoir (6) to the second side (42) of the hydraulic actuator (4) via the pressure-to-open line (9) and wherein the switching system (7) is arranged to move the coupling device (3) to the open state by connecting the low pressure hydraulic fluid reservoir (6) to the first side (41) of the hydraulic actuator (4) via the pressure-to-close line (8) and connecting the high pressure hydraulic fluid source (5) to the second side (42) of the hydraulic actuator (4) via the pressure-to-open line (9),
wherein the switching system (7) comprises a biased pneumatically actuated switch associated with the pressure-to-close line (8) or pressure-to-open line (9), which biased pneumatically actuated switch (71) has a biased position corresponding to the open state of the coupling device (3) and an override position corresponding to the closed state of the coupling device (3), wherein the override position is activated by the gas pressure in the gas connection.

The biased pneumatically actuated switch may be associated with the pressure-to-close line (8) or pressure-to-open line (9), which means that the biased pneumatically actuated switch may be comprised by, part of or positioned in the pressure-to-close line (8) or pressure-to-open line (9). In this situation the hydraulic fluid will actually flow through the biased pneumatically actuated switch. This situation will described in more detail with reference to Fig.'s 1a and 2.

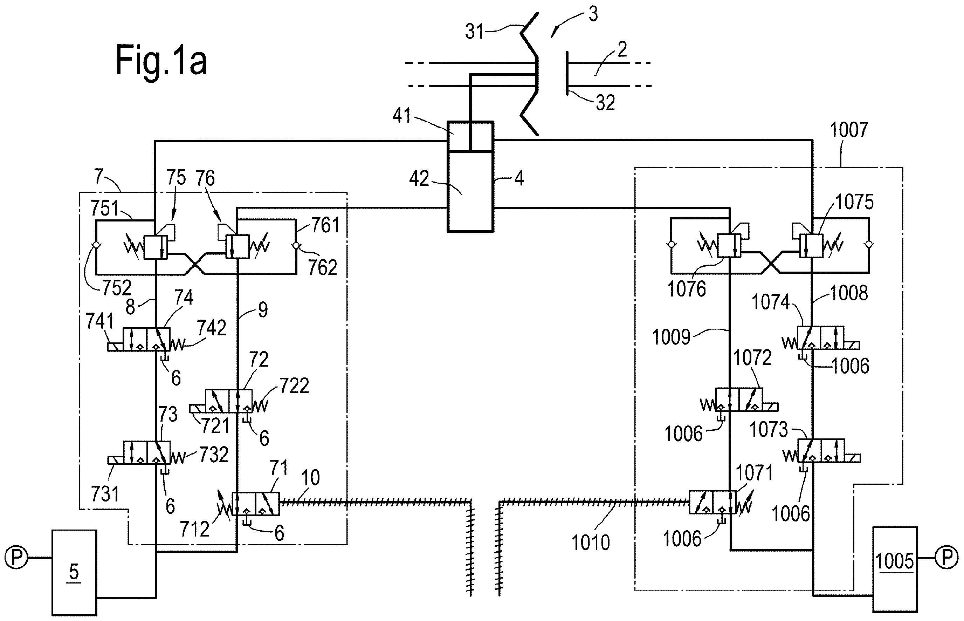

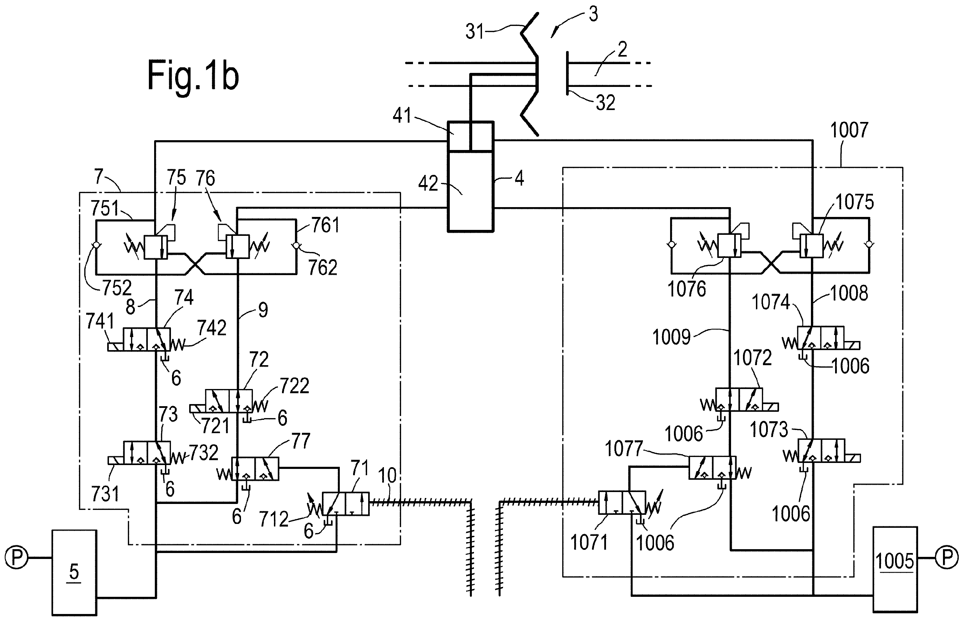

According to a variant the biased pneumatically actuated switch may not be comprised by the pressure-to-close line (8) or pressure-to-open line (9), but may be used to control a further switch comprised by the pressure-to-close line (8) or pressure-to-open line (9). An example thereof will be described in more detail below with reference to Fig. 1b.

The override position is activated by the gas pressure, e.g. through a pneumatic gate line (10), when the internal gas pressure in the gas connection is sufficient to overcome the biasing of the biased pneumatically actuated switch (71). The internal gas pressure needed may correspond to a pre-selected override threshold value. The biasing force is such that the switching towards the override position takes place when the internal gas pressure in the gas connection is at or above the pre-selected threshold value.

The biased pneumatically actuated switch (71) may be fluidly connected to the gas connection via a pneumatic gate line (10). The pneumatic gate line (10) can for instance be formed as a pipe, tubing conduit or (flexible) hose.

In other words, when there is high pressure in the gas connection (i.e. at or above the preselected override threshold value) the biased pneumatically actuated switch
- forces the second side of the hydraulic actuator to be connected to the low pressure hydraulic fluid reservoir and thus prevents the second side of the hydraulic actuator to be connected to the high pressure hydraulic fluid source, or
- forces the first side of the hydraulic actuator to be connected to the high pressure hydraulic fluid source and thus prevents the first side of the hydraulic actuator to be connected to the low pressure hydraulic fluid reservoir.

Consequently, the coupling device is prevented from opening when there is high pressure in the gas connection.

The invention will be further illustrated hereinafter by way of example only, and with reference to the non-limiting drawing in which;
Fig. 1a schematically shows a loading assembly according to an embodiment,
Fig. 1b schematically shows a loading assembly according to an alternative embodiment, and
Fig. 2 schematically shows a loading assembly according to an alternative embodiment.

For the purpose of this description, a single reference number will be assigned to a line as well as a stream carried in that line. Same reference numbers refer to similar components. The person skilled in the art will readily understand that, while the invention is illustrated making reference to one or more a specific combinations of features and measures, many of those features and measures are functionally independent from other features and measures such that they can be equally or similarly applied independently in other embodiments or combinations.

An improved loading assembly and switching system is presently proposed for conveying a pressurized gas from a floating structure to another structure. The loading assembly comprises a gas conduit that extends between the floating structure and the other structure, to convey a pressurized gas stream between the two structures, and an emergency disconnection coupler configured in the gas conduit.

Figures la, 1b and 2 schematically show possible implementations of the loading assembly wherein a number of the proposed improvements are illustrated.

Fig.'s 1a, 1b and 2 schematically depict a first gas conduit 1 and a second gas conduit 2. Although not shown, the first gas conduit 1 may be mounted on the floating structure and the second gas conduit 2 may be mounted on an other structure, located adjacent to the floating structure. The adjacent structure may also be a floating structure.

The first and second gas conduits 1 and 2 may be part of a loading assembly which allows pressurized gas to be transferred between the floating structure and the another structure. Suitably, although this is not a requirement of the present invention, the first and/or second gas conduits 1,2 is/are supported on a loading arm.

As already indicated above, the coupling device 3 is mechanically coupled to the hydraulic actuator 4 to move the coupling device 3 between the closed and open state. The coupling device 3 may also be referred to as an Emergency Disconnection Coupler (EDC).

The coupling device 3 may comprise an actuated part 31 and a passive part 32. The actuated part 31 is connected to the hydraulic actuator 4 and is configured to releasably couple with the passive coupling part 32, whereby in a coupled position a fluid connection is established between the first and/or second gas conduits 1,2.

The actuated part 31 may be of a known type having a plurality of jaws pivotally coupled to a body and distributed around a circumference of the body. The jaws can physically clamp to the passive part 32 when the jaws are moved into an engaged position whereby the actuated part 31. An non-limiting example is disclosed in US Patent 6,843,511, the description of which is incorporated herein by reference.

The hydraulic actuator 4 may be any suitable type. In general, the hydraulic actuator 4 is capable of transferring hydraulic power to motion. Examples include a hydraulic piston device, or one or more hydraulic motors. Suitably the hydraulic means can be operated bi-directionally.

For instance, the hydraulic actuator is of a piston-cylinder type, comprising a piston which divides the internal space of the cylinder in a first side 41 and second side 42, wherein the pistion is capable of moving in and out the cylinder under the influence of a differential pressure between the first and second side 41, 42. Other suitable hydraulic actuators also have a first side 41 and a second side 42 between which a hydraulic pressure difference can be applied. The piston is connected to the actuated part 31 of the coupling device 3.

The first side 41 of the hydraulic actuator 4 is connected to the pressure to close line 8 and the second side 42 of the hydraulic actuator 4 is connected to the pressure to open line 9. If there is sufficient positive pressure differential between the pressure-to-close line 8 and the pressure-to-open line 9 the hydraulic actuator 4 is forced to move toward a position associated with the closed state of the coupling device 3. If there is sufficient negative pressure differential between the pressure-to-close line 8 and the pressure-to-open line 9 the hydraulic actuator 4 is forced to move toward a position associated with the open state of the Emergency Disconnection Coupler (EDC) 3. Sufficient, in this context, means high enough to overcome counter forces including mechanical friction forces, flow friction losses, etc.

If needed, the hydraulic actuator 4 may be mounted in a pivotable manner to allow the linear movement of the hydraulic actuator 4 to be transferred to the typically nonlinear movement of the actuated part 31 of the coupling device 3.

Further provided is a high pressure hydraulic fluid source 5 providing hydraulic fluid to the hydraulic actuator 4 and a low pressure hydraulic fluid reservoir 6 receiving hydraulic fluid from the hydraulic actuator 4. Although not shown, hydraulic fluid may be returned from the low pressure hydraulic fluid reservoir 6 to the high pressure hydraulic fluid source 5. A pump P may be provided to pressurize the hydraulic fluid. Further provided, although not shown, may be a power supply to provide sufficient power to the pump.

The term low pressure and high pressure are used in relative manner, i.e. with respect to each other, indicating that the high pressure hydraulic fluid source 5 is at a higher pressure than the low pressure hydraulic fluid reservoir 6. The low pressure hydraulic fluid reservoir 6 may be at a pressure above atmospheric pressure, e.g. 5 bar.

Although the low pressure hydraulic fluid reservoir 6 is shown inside the dashed box indicated switching system 7, it is not necessarily part of the switching system 7.

In between the high pressure hydraulic fluid source 5 and a low pressure hydraulic fluid reservoir 6 is a switching system 7. The pressure-to-close line 8 and the pressure-to-open line 9 run through the switching system 7 and the switching system 7 comprises a number of switches to connect the pressure-to-close line 8 to either the high pressure hydraulic fluid source 5 and a low pressure hydraulic fluid reservoir 6 and connect the pressure-to-open line 9 to the other of the the high pressure hydraulic fluid source 5 and a low pressure hydraulic fluid reservoir 6.

According to the embodiment shown in Fig.s 1a-b, the biased pneumatically actuated switch 71 is associated with the pressure-to-open line 9, wherein the biased pneumatically actuated switch 71 has a biased position in which it connects the pressure-to-open line 9 to the high pressure hydraulic fluid source 5 and which has an override position that is activated by the gas pressure in the gas connection in which it connects the pressure-to-open line 9 to the low pressure hydraulic fluid reservoir 6. The biasing force may for instance be provided by a spring.

The biased pneumatically actuated switch 71 has an override position connecting the pressure-to-open line 9 to the low pressure hydraulic fluid reservoir 6. The biased pneumatically actuated switch 71 is fluidly connected to the gas connection, e.g. via a pneumatic gate line 10, to use the gas pressure to push against the biasing force. If the gas pressure is sufficiently high, i.e. above a pre-selected override threshold value, the gas pressure overrides the biasing force and the switch 71 assume the override position. In other words, the override position is activated by the gas pressure in the gas connection.

It is noted that in the figures pneumatic gate line 10, for reasons of clarity, is not shown as being connected to the gas connection, e.g. first and second gas conduit 1, 2, while in practice it is connected such that a fluid connection is established allowing the pressure inside the gas connection being transferred to the pneumatic gate line 10.

The biased pneumatically actuated switch 71 may be comprised by, part of or positioned in the pressure-to-open line 9. In this situation the hydraulic fluid will actually flow through the biased pneumatically actuated switch.

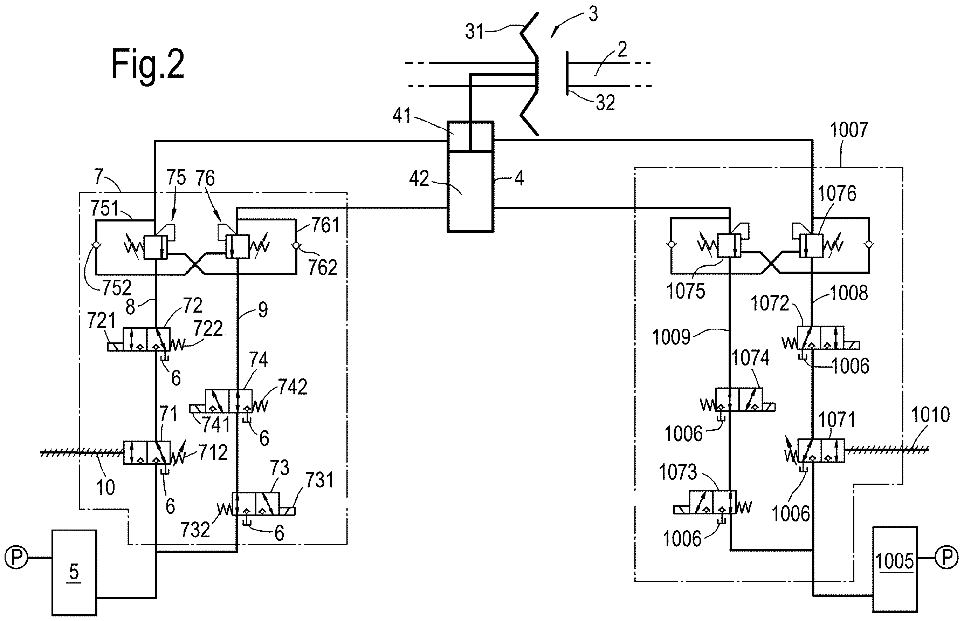

According to an alternative embodiment (shown in Fig. 2), the biased pneumatically actuated switch 71 is associated with the pressure-to-close line 8, which has a biased position in which it connects the pressure-to-close line 8 to the low pressure hydraulic fluid reservoir 6 and which has an override position that is activated by the gas pressure in the gas connection in which it connects the pressure-to-close line 8 to the high pressure hydraulic fluid source 5. The biased pneumatically actuated switch 71 may be comprised by, part of or positioned in the pressure-to-close line 8. In this situation the hydraulic fluid will actually flow through the biased pneumatically actuated switch.

According to a variant the biased pneumatically actuated switch may not be comprised by, part of or positioned in the pressure-to-close line 8 or pressure-to-open line 9, but may be used to control a further switch comprised by the pressure-to-close line 8 or pressure-to-open line 9. An example thereof will be described in more detail below with reference to Fig. 1b

As shown in Fig. 1b, instead of positioning the biased pneumatically actuated switch 71 to be comprised by, part of or positioned in the pressure-to-close line 8 or pressure-to-open line 9, such that the hydraulic fluid actually flows through the biased pneumatically actuated switch 71, the biased pneumatically actuated switch 71 may work together with a biased hydraulically actuated switch 77 which is comprised by, part of or positioned in the pressure-to-close line 8 (as shown in Fig. 1b) or pressure-to-open line 9 (not shown). The biased hydraulically actuated switch 77 may be biased to a position associated with the open position (either connecting the high pressure hydraulic fluid source 5 and the pressure-to-open line 9/ the second side 42 of the hydraulic actuator 4 or connecting the low pressure hydraulic fluid reservoir 6 and the pressure-to-close line 8/first side 41 of the hydraulic actuator 4) and has an override position corresponding to the closed state of the coupling device 3, wherein the override position is activated by the gas pressure in the gas connection via the pneumatically actuated switch 71, the pneumatically actuated switch 71 having a biased position and an override position, wherein in the override position is actuated by the gas pressure and in which the high pressure hydraulic fluid source 5 is connected to the hydraulically actuated switch 77 via the pneumatically actuated switch 71 to force the hydraulically actuated switch 77 into the override position.

According to the embodiments shown, the biased pneumatically actuated switch 71 acts on only one of the pressure-to-close line 8 or the pressure-to-open line 9. The loading assembly may comprise a single biased pneumatically actuated switch which is either comprised by the pressure-to-close line 8 or the pressure-to-open line 9, wherein the other of the pressure-to-close line 8 or the pressure-to-open line 9 does not comprise a biased pneumatically actuated switch or a switch being controlled by the gas pressure in the gas connection. The biased pneumatically actuated switch is thus associated with either the pressure-to-close line 8 or the pressure-to-open line 9.

This makes the loading assembly more reliable than the loading assembly as described in prior European patent application 13189337.2 filed in the name of the present applicant, in which the gas pressure in the gas connection (gate line) is used to act on two switches in two hydraulic lines.

The biased pneumatically actuated switch 71 may be directly connected to the gas pressure in the gas connection via pneumatic gate line 10. Such a direct connection reduces the chance of failures.

**Claim 5** According to an embodiment there is provided a loading assembly further comprising a first fail-open selection switch 72 which is positioned in series with the biased pneumatically actuated switch 71.

According to the embodiment shown in Fig.'s 1a-b, the first fail-open selection switch 72 is positioned in the pressure-to-open line 9.

This first fail-open selection switch 72 has a biased position in which it connects the second side 42 of the hydraulic actuator 4 to the high pressure hydraulic fluid source 5 via the pressure-to-open line 9 and which has an activated position in which it connects the second side 42 of the hydraulic actuator 4 to the low pressure hydraulic fluid reservoir 6 via the pressure-to-open line 9.

The first fail-open selection switch 72 can be activated in any suitable manner, including manual operation, mechanical operation, hydraulically operation, electrical operation, solenoid operation. When the first fail-open selection switch 72 is activated, the second side 42 of the hydraulic actuator 4 is connected to the low pressure hydraulic fluid reservoir 6 corresponding to the closed state of the coupling device 3. In case the first fail-openselection switch 72 is not operated or fails, the first fail-open selection switch 72 assumes its biased position in which it connects the second side 42 of the hydraulic actuator 4 to the high pressure hydraulic fluid source 5 corresponding to the open state of the coupling device 3.

By providing the first fail-open selection switch 72 in series with the biased pneumatically actuated switch 71 the system is made safer as one functions as a back-up for the other. This way, as indicated earlier, if the first fail-open selection switch 72 is not operated or fails, it will move to connect the second side 42 of the hydraulic actuator 4 to the high pressure hydraulic fluid source 5 allowing the coupling device 3 to travel towards the open state unless the pressure in the gas connection is at or above a pre-selected threshold value. In case the internal pressure in the gas connection is at or above a pre-selected threshold value, the biased pneumatically actuated switch 71 further connects the second side 42 of the hydraulic actuator 4 to the low pressure hydraulic fluid reservoir 6 and prevents the second side 42 of the hydraulic actuator 4 to be connected to the high pressure hydraulic fluid source 5. Unwanted opening of the coupling device 3 is thus prevented.

According to the embodiment shown in Fig. 2, the first fail-open selection switch 72 is positioned in the pressure-to-close line 8 positioned in series with the biased pneumatically actuated switch 71.

According to an embodiment the switching system 7 comprises a second fail-open selection switch 73, which is positioned in the other of the pressure-to-close line 8 or pressure-to-open line 9 to which the biased pneumatically actuated switch 71 is associated with.

According to the embodiment depicted in Fig.'s 1a-b, the second fail-open selection switch 73 has a biased position in which it connects the first side 41 of the hydraulic actuator 4 to the low pressure hydraulic fluid reservoir 6 via the pressure-to-close line 8 and which has an activated position in which it connects the first side 41 of the hydraulic actuator 4 to the high pressure hydraulic fluid source 5 via the pressure-to-close line 8.

The biased position of the second switch 73 thus corresponds to the open state of the coupling device 3 and the activated position to the closed state of the coupling device 3. In case the coupling device 3 should be in the closed state and a power failure occurs, the second fail-open selection switch 73 will assume its biased position corresponding to the open state of the coupling device 3, in which it connects the first side 41 of the hydraulic actuator 4 to the low pressure hydraulic fluid reservoir 6 via the pressure-to-close line 8. However, as long as a high gas pressure is present in the gas connection, the second side 42 of the hydraulic actuator 4 is also connected to the low pressure hydraulic fluid reservoir 6, so the actuator will not be driven to the open state. Frictional forces of the hydraulic actuator are large enough to prevent unwanted movement of the hydraulic actuator 4.

According to the embodiment depicted in Fig. 2, the second fail-open selection switch 73 has a biased position in which it connects the second side 42 of the hydraulic actuator 4 to the high pressure hydraulic fluid source 5 via the pressure-to-open line 9 and which has an activated position in which it connects the second side 42 of the hydraulic actuator 4 to the low pressure hydraulic fluid reservoir 6 via the pressure-to-close line 9.

According to a further embodiment, the switching system 7 comprises a third fail-open selection switch 74 positioned in series with the second fail-open selection switch 73.

According to the embodiment depicted in Fig.'s 1a-b, the third fail-open selection switch 74 has a biased position in which it connects the first side 41 of the hydraulic actuator 4 to the low pressure hydraulic fluid reservoir 6 via the pressure-to-close line 8 and which has an activated position in which it connects the first side 41 of the hydraulic actuator 4 to the high pressure hydraulic fluid source 5 via the pressure-to-close line 8.

The biased position thus corresponds to the open state of the coupling device 3 and the activated position to the closed state of the coupling device 3.

According to the embodiment depicted in Fig. 2, the third fail-open selection switch 74 has a biased position in which it connects the second side 42 of the hydraulic actuator 4 to the high pressure hydraulic fluid source 5 via the pressure-to-open line 9 and which has an activated position in which it connects the second side 42 of the hydraulic actuator 4 to the low pressure hydraulic fluid reservoir 6 via the pressure-to-open line 9.

The second and third fail-open selection switches 73, 74 are positioned in series such that failure of one is compensated by the other.

For use in the loading assembly, solenoid operated is the preferred option for the first, second, third or further fail-open selection switches 72, 73, 74, as indicated by solenoids 721, 731, 741.

The biasing of the biased pneumatically actuated switch 71 or the first, second, third or further fail-open selection switches 72, 73, 74, is preferably obtained by spring elements 712, 722, 732, 742 exerting a biasing force pushing the switch to its biased position.

The activated or override position can be obtained by providing an activation or override force counteracting the biasing force pushing the switch to a position opposite the biased position. In case of the fail-open selection switch this activation force can be an electrical or magnetic force generated by a solenoid coil. The activation force can be switched on and off by an operator. In case of the biased pneumatically actuated switch the override override force is exerted by the gas pressure.

According to an embodiment there is provided a loading assembly wherein the switching system 7 comprises a first hydraulically actuated locking switch 75 positioned in the pressure-to-close line 8, which first hydraulically actuated locking switch 75 has a biased closed position in which it closes the pressure-to-close line 8 and an hydraulically actuated open position in which it opens the pressure-to-close line 8, which hydraulically actuated open position is activated by hydraulic pressure in the second side 42 of the hydraulic actuator 4,
wherein the switching system 7 comprises a second hydraulically actuated locking switch 76 positioned in the pressure-to-open line 9, which second hydraulically actuated locking switch 76 has a biased closed position in which it closes the pressure-to-open line 9 and an hydraulically actuated open position in which it opens the pressure-to-open line 9, which hydraulically actuated open position is activated by hydraulic pressure in the first side 41 of the hydraulic actuator 4,
wherein both the first and second hydraulically actuated locking switches 75, 76 are provided with a by-pass conduit 751, 761, each by-pass conduit 751, 761 comprising a one-way valve 752, 762 allowing hydraulic fluid to flow towards the first and second side 41, 42 of the hydraulic actuator 4 respectively.

The one-way valves 752, 762, also referred to as check-valves, allow hydraulic fluid to flow in one direction, in this case towards the hydraulic actuator 4.

The biasing of the first and second hydraulically actuated locking switches 75, 76, is preferably obtained by suitable spring elements exerting a biasing force pushing the switch to the closed position.

Although first and second hydraulically actuated locking switches 75, 76 are shown remote from the hydraulic actuator 4, according an embodiment, the first and second hydraulically actuated locking switches 75, 76 may be physically positioned against the hydraulic actuator 4, omitting the need for pipes or the like in between the first and second hydraulically actuated locking switches 75, 76 and the hydraulic actuator 4.

As hydraulic actuator 4 is a linear actuator, generating a linear movement, which needs to be transferred into a nonlinear movement following the movement of the coupling device when being opened or closed, the hydraulica actuator may be mounted in a pivatable manner. For tht reason, the pressure-to-close line 8 or the pressure-to-open line 9 may at least partially be flexible, for instance in between the first and second hydraulically actuated locking switches 75, 76 and a housing comprising the biased pneumatically actuated switch 71 and the first, second, third fail-open selection switches 72, 73, 74.

During normal operation, hydraulic pressure is either present in the pressure-to-close line 8 or the pressure-to-open line 9, as one of these lines 8, 9 is fluidly connected to the high pressure hydraulic fluid source 5. High hydraulic pressure in one of these lines 8, 9 ensures that the hydraulically actuated locking switch in the other of these lines 8,9 is open to evacuate the respective side of the hydraulic cylinder 4 and allow hydraulic fluid to flow towards the low pressure hydraulic fluid reservoir 6. The by-pass conduits 751, 761 with check-valves 752, 762 ensure that high pressure hydraulic fluid can always reach the hydraulic actuator 4 in the side whose hydraulic actuated valve is closed.

This construction ensures that if a pressure loss occurs in either the pressure-to-close line 8 or the pressure-to-open line 9, for instance as a result of power loss, leakage or failure in one of the switching elements, the hydraulic fluid in the hydraulic actuator is isolated. No hydraulic fluid will flow towards the hydraulic actuator 4 as a result of the pressure loss and no hydraulic fluid will flow away from the hydraulic actuator 4 as the first and second hydraulically actuated valves 75, 76 will assume the biased closed position.

According to a further embodiment, a secondary high pressure hydraulic fluid source (1005), a secondary pneumatic gate line (1010) and a secondary switching system (1007) are provided.

In other words, switching system 7, the pneumatic gate line 10 and the high pressure hydraulic fluid source 5 and possibly the low pressure hydraulic fluid reservoir 6 are dublicated for redundancy reasons.

This provides additional redundancy and ensures that the coupling device 3 can still be operated if one of the high pressure hydraulic fluid source 5 or the secondary high pressure hydraulic fluid source 1005 fails.

If the high pressure hydraulic fluid source 5 fails, the hydraulically actuated valves 75, 76 will close the first and second conduit 8, 9 preventing the hydraulic fluid provided by the secondary high pressure hydraulic fluid source 1005 to 'leak away' via the first and second conduits 8,9 of the so-called (primary) switching system 7.

Such a loading assembly and switching system according to any one of the above described embodiments can be used for transferring pressurized gas between the floating structure and the other structure in either direction. The need to transfer pressurized gas may for instance arise if one of the structures comprises a gas processing unit A floating structure comprising a gas processing unit may be referred to as floating gas processing unit. In the art, a floating gas processing unit usually comprises a floating hull provided with equipment for receiving natural gas in a starting condition, processing the natural gas, and subsequently discharging the natural gas in a processed condition, whereby the processed condition is different from the starting condition.

Examples of a floating gas processing unit are a floating storage and regasification unit (FSRU) and a Storage and Regasification Vessel (SRV). These floating unitsreceive liquefied natural gas (LNG), which is natural gas in a cryogenic liquefied condition, and are suited with the processing facilities to pump and vaporize the liquefied natural gas by adding heat to it, thereby changing its condition to a gaseous state. The natural gas is then discharged in the form of a regasified natural gas in gasous phase. The regasified natural gas is typically piped from the FSRU/SRV to shore, where the natural gas may be used in various ways. For example it may be added to a natural gas distribution grid. Usually the liquefied natural gas is pressurized before being regasified, in which case the regasified natural gas is piped at high pressure. A floating regasification unit often has cryogenic storage capacity for (temporarily) storing the LNG prior to it being vaporized. Such a floating gasification unit with cryogenic storage capacity is typically referred to as a floating storage and regasification unit (FSRU). A non-limiting example is described in US pre-grant patent application publication No. 2006/0156744.

Another example of a floating gas processing unit is a floating natural gas liquefaction unit (FLU). Specific examples include floating natural gas liquefaction and storage units (FLSU) such as described in for instance WO 2007/064209 and WO 2010/069910. Such an FLU can be arranged to receive pressurized the natural gas from the other structure and to cryogenically cool the natural gas whereby liquefying the natural gas to produce LNG. In case of an FLSU, the LNG may be stored in cryogenic storage tanks before being off-loaded to an LNG tanker.

Although this is not a requirement of the invention, it is conceived that the loading assembly may comprise a loading arm extending between the floating structure and the other structure to support the gas conduit. Preferably on either side of the gas connection at least one isolation valve is configured in the gas conduit, whereby the gas connection is between these isolation valves. For ease of reference, these isolation valves will be referred to as spool-side isolation valve and arm-side isolation valve, although it is expressly stated that these terms "arm-side isolation valve" and "spool-side isolation valve" are not intended to infer that a spool and an arm are present. However, it is contemplated that many embodiments wherein the invention is implemented will have an arm and a spool, and thus these names have been given to the respective isolation valves. Furthermore, the loading assembly is further provided with a blow down valve that fluidly communicates with the gas connection via a blow down junction arranged in the gas connection between the spool-side isolation valve and the emergency disconnection coupler. Herewith it is possible to depressurize the gas connection, whereby lowering the internal gas pressure to below the preselected override threshold value, to bring the switching system in the fail-unlocked regime.

Preferably, each of the spool-side isolation valve and the arm-side isolation valve and the blow down valve are biased valves whereby the blow down valve is moved in open position when the blow down valve is unpowered, and the spool-side isolation valve is moved in closed position when the spool-side isolation valve is unpowered and the arm-side isolation valve is moved in closed position when the arm-side isolation valve is unpowered. This further facilitates the fail-safe configuration of the assembly in case of inadvertent loss of power.

The person skilled in the art will understand that the present invention can be carried out in many various ways

## Claims

1. Loading assembly for conveying a pressurized gas stream between a floating structure and an other structure, the loading assembly comprising:
- a first gas conduit (1) mounted on the floating structure or the other structure,
- a coupling device (3) which is switchable between a closed state and an open state, wherein in the closed state the coupling device (3) couples the first gas conduit (1) and a second gas conduit (2) mounted on the other of the floating structure or the other structure to create a gas connection between the first and second gas conduit (1, 2) to enable conveying a pressurized gas stream between the two structures, wherein gas present in the gas connection has a gas pressure and wherein in the open state coupling between the first and second gas conduits (1, 2) is released,
- a hydraulic actuator (4) mechanically coupled to the coupling device (3) to move the coupling device (3) between the closed and open state, the hydraulic actuator (4) comprising a first side (41) and a second side (42);
- a high pressure hydraulic fluid source (5) providing hydraulic fluid to the hydraulic actuator (4) and a low pressure hydraulic fluid reservoir (6) receiving hydraulic fluid from the hydraulic actuator (4),
- a switching system (7) arranged between the high pressure hydraulic fluid source (5), the low pressure hydraulic fluid reservoir (6) and the hydraulic actuator (4), wherein the switching system (7) comprises a pressure-to-close line (8) fluidly connected to the first side (41) and a pressure-to-open line (9) fluidly connected to the second side (42), wherein the switching system (7) is arranged to move the coupling device (3) to the closed state by connecting the high pressure hydraulic fluid source (5) to the first side (41) of the hydraulic actuator (4) via the pressure-to-close line (8) and connecting the low pressure hydraulic fluid reservoir (6) to the second side (42) of the hydraulic actuator (4) via the pressure-to-open line (9) and wherein the switching system (7) is arranged to move the coupling device (3) to the open state by connecting the low pressure hydraulic fluid reservoir (6) to the first side (41) of the hydraulic actuator (4) via the pressure-to-close line (8) and connecting the high pressure hydraulic fluid source (5) to the second side (42) of the hydraulic actuator (4) via the pressure-to-open line (9),
wherein the switching system (7) comprises a biased pneumatically actuated switch associated with the pressure-to-close line (8) or pressure-to-open line (9), which biased pneumatically actuated switch (71) has a biased position corresponding to the open state of the coupling device (3) and an override position corresponding to the closed state of the coupling device (3), wherein the override position is activated by the gas pressure in the gas connection.

2. Loading assembly according to claim 1, wherein the biased pneumatically actuated switch (71) is associated with the pressure-to-open line (9), wherein the biased pneumatically actuated switch (71) has a biased position in which it connects the pressure-to-open line (9) to the high pressure hydraulic fluid source (5) and which has an override position that is activated by the gas pressure in the gas connection in which it connects the pressure-to-open line (9) to the low pressure hydraulic fluid reservoir (6).

3. Loading assembly according to claim 1 wherein the biased pneumatically actuated switch (71) is associated with the pressure-to-close line (8), which has a biased position in which it connects the pressure-to-close line (8) to the low pressure hydraulic fluid reservoir (6) and which has an override position that is activated by the gas pressure in the gas connection in which it connects the pressure-to-close line (8) to the high pressure hydraulic fluid source (5).

4. Loading assembly according to any one of the preceeding claims, wherein the biased pneumatically actuated switch (71) acts on only one of the pressure-to-close line (8) or the pressure-to-open line (9).

5. Loading assembly according to any one of the preceding claims wherein the loading assembly comprise a first fail-open selection switch (72) which is positioned in series with the biased pneumatically actuated switch (71).

6. Loading assembly according to any one of the preceding claims wherein the switching system (7) comprises a second fail-open selection switch (73), which is positioned in the other of the pressure-to-close line (8) or pressure-to-open line (9) to which the biased pneumatically actuated switch (71) is associated with.

7. Loading assembly according to claim 6, wherein the switching system (7) comprises a third fail-open selection switch (74) positioned in series with the second fail-open selection switch (73).

8. Loading assembly according to any one of the preceding claims, wherein the switching system (7) comprises a first hydraulically actuated locking switch (75) positioned in the pressure-to-close line (8), which first hydraulically actuated locking switch (75) has a biased closed position in which it closes the pressure-to-close line (8) and an hydraulically actuated open position in which it opens the pressure-to-close line (8), which hydraulically actuated open position is activated by hydraulic pressure in the second side (42) of the hydraulic actuator (4),
wherein the switching system (7) comprises a second hydraulically actuated locking switch (76) positioned in the pressure-to-open line (9), which second hydraulically actuated locking switch (76) has a biased closed position in which it closes the pressure-to-open line (9) and an hydraulically actuated open position in which it opens the pressure-to-open line (9), which hydraulically actuated open position is activated by hydraulic pressure in the first side 41 of the hydraulic actuator (4),
wherein both the first and second hydraulically actuated locking switches (75, 76) are provided with a by-pass conduit (751, 761), each by-pass conduit (751, 761) comprising a one-way valve (752, 762) allowing hydraulic fluid to flow towards the first and second side (41, 42) of the hydraulic actuator (4) respectively.

9. Loading assembly according to any one of the preceding claims wherein a secondary high pressure hydraulic fluid source (1005), a secondary pneumatic gate line (1010) and a secondary switching system (1007) are provided.

10. A switching system (7) for a loading assembly for conveying a pressurized gas stream between a floating structure and another structure, the switching system (7) being arranged between a high pressure hydraulic fluid source (5), a low pressure hydraulic fluid reservoir (6) and an hydraulic actuator (4), the hydraulic actuator (4) being connected or connectable to a coupling device (3), the coupling device (3) being arranged to, in a closed state, couple a first gas conduit (1) and a second gas conduit (2) to create a gas connection between the first and second gas conduit (1, 2) to enable conveying a pressurized gas stream between the two structures, wherein gas present in the gas connection has a gas pressure and wherein in an open state coupling between the first and second gas conduits (1, 2) is released,
wherein the switching system (7) comprises a pressure-to-close line (8) fluidly connected to a first side (41) of the hydraulic actuator (4) and a pressure-to-open line (9) fluidly connected to a second side (42) of the hydraulic actuator (4), wherein the switching system (7) is arranged to move the coupling device (3) to the closed state by connecting the high pressure hydraulic fluid source (5) to the first side (41) of the hydraulic actuator (4) via the pressure-to-close line (8) and connecting the low pressure hydraulic fluid reservoir (6) to the second side (42) of the hydraulic actuator (4) via the pressure-to-open line (9) and wherein the switching system (7) is arranged to move the coupling device (3) to the open state by connecting the low pressure hydraulic fluid reservoir (6) to the first side (41) of the hydraulic actuator (4) via the pressure-to-close line (8) and connecting the high pressure hydraulic fluid source (5) to the second side (42) of the hydraulic actuator (4) via the pressure-to-open line (9),
wherein the switching system (7) comprises a biased pneumatically actuated switch associated with the pressure-to-close line (8) or pressure-to-open line (9),
which biased pneumatically actuated switch (71) has a biased position corresponding to the open state of the coupling device (3) and an override position corresponding to the closed state of the coupling device (3), wherein biased pneumatically actuated switch is connected or connectable to the gas connection and the override position is activated by the gas pressure in the gas connection.

## Patentansprüche

1. Ladeanordnung zum Fördern eines Druckgasstroms zwischen einer schwimmenden Struktur und einer anderen Struktur, wobei die Ladeanordnung umfasst:
- eine erste Gasleitung (1), die an der schwimmenden Struktur oder der anderen Struktur montiert ist,
- eine Kopplungsvorrichtung (3), die zwischen einem geschlossenen Zustand und einem offenen Zustand umschaltbar ist, wobei in dem geschlossenen Zustand die Kopplungsvorrichtung (3) die erste Gasleitung (1) und eine zweite Gasleitung (2) koppelt, die auf der anderen Seite von der schwimmenden Struktur oder der anderen Struktur montiert ist, um eine Gasverbindung zwischen der ersten und der zweiten Gasleitung (1, 2) herzustellen, um das Fördern eines Druckgasstroms zwischen den beiden Strukturen zu erlauben, wobei das Gas, das in der Gasverbindung vorhanden ist, einen Gasdruck aufweist und wobei die Kopplung in dem offenen Zustand zwischen der ersten und der zweiten Gasleitung (1, 2) freigegeben wird,
- einen hydraulischen Stellantrieb (4), der mit der Kopplungsvorrichtung (3) mechanisch gekoppelt ist, um die Kopplungsvorrichtung (3) zwischen dem geschlossenen und dem offenen Zustand zu bewegen, wobei der hydraulische Stellantrieb (4) eine erste Seite (41) und eine zweite Seite (42) umfasst;
- eine Hochdruckquelle für hydraulisches Fluid (5), die hydraulisches Fluid für den hydraulischen Stellantrieb (4) bereitstellt, und einen Niederdruckbehälter für hydraulisches Fluid (6), der hydraulisches Fluid von dem hydraulischen Stellantrieb (4) aufnimmt,
- ein Schaltsystem (7), das zwischen der Hochdruckquelle für hydraulisches Fluid (5), dem Niederdruckbehälter für hydraulisches Fluid (6) und dem hydraulischen Stellantrieb (4) eingerichtet ist, wobei das Schaltsystem (7) eine Druck-zum-Schließen-Rohrleitung (8), die mit der ersten Seite (41) in Fluidverbindung steht, und eine Druck-zum-Öffnen-Rohrleitung (9) umfasst, die mit der zweiten Seite (42) in Fluidverbindung steht, wobei das Schaltsystem (7) eingerichtet ist, um die Kopplungsvorrichtung (3) in den geschlossenen Zustand durch Verbinden der Hochdruckquelle für hydraulisches Fluid (5) mit der ersten Seite (41) des hydraulischen Stellantriebs (4) über die Druck-zum-Schließen-Rohrleitung (8) und durch Verbinden des Niederdruckbehälters für hydraulisches Fluid (6) mit der zweiten Seite (42) des hydraulischen Stellantriebs (4) über die Druck-zum-Öffnen-Rohrleitung (9) zu bewegen und wobei das Schaltsystem (7) eingerichtet ist, um die Kopplungsvorrichtung (3) in den offenen Zustand durch Verbinden des Niederdruckbehälters für hydraulisches Fluid (6) mit der ersten Seite (41) des hydraulischen Stellantriebs (4) über die Druck-zum-Schließen-Rohrleitung (8) und Verbinden der Hochdruckquelle für hydraulisches Fluid (5) mit der zweiten Seite (42) des hydraulischen Stellantriebs (4) über die Druck-zum-Öffnen-Rohrleitung (9) zu bewegen,
wobei das Schaltsystem (7) einen vorgespannten pneumatisch betätigten Schalter umfasst, der der Druck-zum-Schließen-Rohrleitung (8) oder der Druck-zum-Öffnen-Rohrleitung (9) zugeordnet ist, bei dem der vorgespannte pneumatisch betätigte Schalter (71) eine vorgespannte Position, die dem offenen Zustand der Kopplungsvorrichtung (3) entspricht, und eine Übersteuerungsposition aufweist, die dem geschlossenen Zustand der Kopplungsvorrichtung (3) entspricht, wobei die Übersteuerungsposition durch den Gasdruck in der Gasverbindung aktiviert wird.

2. Ladeanordnung nach Anspruch 1, wobei der vorgespannte pneumatisch betätigte Schalter (71) der Druck-zum-Öffnen-Rohrleitung (9) zugeordnet ist, wobei der vorgespannte pneumatisch betätigte Schalter (71) eine vorgespannte Position aufweist, in der er die Druck-zum-Öffnen-Rohrleitung (9) mit der Hochdruckquelle für hydraulisches Fluid (5) verbindet, und der eine Übersteuerungsposition aufweist, die durch den Gasdruck in der Gasverbindung aktiviert wird, in der er die Druck-zum-Öffnen-Rohrleitung (9) mit dem Niederdruckbehälter für hydraulisches Fluid (6) verbindet.

3. Ladeanordnung nach Anspruch 1, wobei der vorgespannte pneumatisch betätigte Schalter (71) der Druck-zum-Schließen-Rohrleitung (8) zugeordnet ist, der eine vorgespannte Position aufweist, in der er die Druck-zum-Schließen-Rohrleitung (8) mit dem Niederdruckbehälter für hydraulisches Fluid (6) verbindet, und der eine Übersteuerungsposition aufweist, die durch den Gasdruck in der Gasverbindung aktiviert wird, in der er die Druck-zum-Schließen-Rohrleitung (8) mit der Hochdruckquelle für hydraulisches Fluid (5) verbindet.

4. Ladeanordnung nach einem der vorhergehenden Ansprüche, wobei der vorgespannte pneumatisch betätigte Schalter (71) nur auf die Druck-zum-Schließen-Rohrleitung (8) oder die Druck-zum-Öffnen-Rohrleitung (9) wirkt.

5. Ladeanordnung nach einem der vorhergehenden Ansprüche, wobei die Ladeanordnung einen ersten Ausfall-Öffnen-Auswahlschalter (72) umfasst, der mit dem vorgespannten pneumatisch betätigten Schalter (71) in Reihe positioniert ist.

6. Ladeanordnung nach einem der vorhergehenden Ansprüche, wobei das Schaltsystem (7) einen zweiten Ausfall-Öffnen-Auswahlschalter (73) umfasst, der in der anderen der Druck-zum-Schließen-Rohrleitung (8) oder der Druck-zum-Öffnen-Rohrleitung (9) positioniert ist, der der vorgespannte pneumatisch betätigte Schalter (71) zugeordnet ist.

7. Ladeanordnung nach Anspruch 6, wobei das Schaltsystem (7) einen dritten Ausfall-Öffnen-Auswahlschalter (74) umfasst, der mit dem zweiten Ausfall-Öffnen-Auswahlschalter (73) in Reihe positioniert ist.

8. Ladeanordnung nach einem der vorhergehenden Ansprüche, wobei das Schaltsystem (7) einen ersten hydraulisch betätigten Verriegelungsschalter (75) umfasst, der in der Druck-zum-Schließen-Rohrleitung (8) positioniert ist, wobei der erste hydraulisch betätigte Verriegelungsschalter (75) eine vorgespannte geschlossene Position, in der er die Druck-zum-Öffnen-Rohrleitung (8) schließt, und eine hydraulisch betätigte offene Position aufweist, in der er die Druck-zum-Öffnen-Rohrleitung (8) öffnet, wobei die hydraulisch betätigte offene Position durch hydraulischen Druck auf der zweiten Seite (42) des hydraulischen Stellantriebs (4) aktiviert wird, wobei das Schaltsystem (7) einen zweiten hydraulisch betätigten Verriegelungsschalter (76) umfasst, der in der Druck-zum-Öffnen-Rohrleitung (9) positioniert ist, in dem der zweite hydraulisch betätigte Verriegelungsschalter (76) eine vorgespannte geschlossene Position, in der er die Druck-zum-Öffnen-Rohrleitung (9) schließt, und eine hydraulisch betätigte offene Position aufweist, in der er die Druck-zum-Öffnen-Rohrleitung (9) öffnet, wobei die hydraulisch betätigte offene Position durch hydraulischen Druck auf der ersten Seite (41) des hydraulischen Stellantriebs (4) aktiviert wird, wobei sowohl der erste als auch der zweite hydraulisch betätigte Verriegelungsschalter (75, 76) mit einer Bypassleitung (751, 761) bereitgestellt sind, wobei jede Bypassleitung (751, 761) ein Einwegventil (752, 762) umfasst, das es hydraulischem Fluid ermöglicht, zu der ersten beziehungsweise zweiten Seite (41, 42) des hydraulischen Stellantriebs (4) zu fließen.

9. Ladeanordnung nach einem der vorhergehenden Ansprüche, wobei eine sekundäre Hochdruckquelle für hydraulisches Fluid (1005), eine sekundäre pneumatische Sperrrohrleitung (1010) und ein sekundäres Schaltsystem (1007) bereitgestellt werden.

10. Schaltsystem (7) für eine Ladeanordnung zum Fördern eines Druckgasstroms zwischen einer schwimmenden Struktur und einer anderen Struktur, wobei das Schaltsystem (7) zwischen einer Hochdruckquelle für hydraulisches Fluid (5), einem Niederdruckbehälter für hydraulisches Fluid (6) und einem hydraulischen Stellantrieb (4) eingerichtet ist, wobei der hydraulische Stellantrieb (4) mit einer Kopplungsvorrichtung (3) verbunden oder verbindbar ist, wobei die Kopplungsvorrichtung (3) eingerichtet ist, um in einem geschlossenen Zustand eine erste Gasleitung (1) und eine zweite Gasleitung (2) zu koppeln, um eine Gasverbindung zwischen der ersten und der zweiten Gasleitung (1, 2) herzustellen, um das Fördern eines Druckgasstroms zwischen den zwei Strukturen zu erlauben, wobei Gas, das in der Gasverbindung vorhanden ist, einen Gasdruck aufweist, und wobei in einem offenen Zustand die Kopplung zwischen der ersten und der zweiten Gasleitung (1, 2) freigegeben ist, wobei das Schaltsystem (7) eine Druck-zum-Schließen-Rohrleitung (8), die mit einer ersten Seite (41) des hydraulischen Stellantriebs (4) in Fluidverbindung steht, und eine Druck-zum-Öffnen-Rohrleitung (9) umfasst, die mit einer zweiten Seite (42) des hydraulischen Stellantriebs (4) in Fluidverbindung steht, wobei das Schaltsystem (7) eingerichtet ist, um die Kopplungsvorrichtung (3) in den geschlossenen Zustand durch Verbinden der Hochdruckquelle für hydraulisches Fluid (5) mit der ersten Seite (41) des hydraulischen Stellantriebs (4) über die Druck-zum-Schließen-Rohrleitung (8) und Verbinden des Niederdruckbehälters für hydraulisches Fluid (6) mit der zweiten Seite (42) des hydraulischen Stellantriebs (4) über die Druck-zum-Öffnen-Rohrleitung (9) zu bewegen und wobei das Schaltsystem (7) eingerichtet ist, um die Kopplungsvorrichtung (3) in den offenen Zustand durch Verbinden des Niederdruckbehälters für hydraulisches Fluid (6) mit der ersten Seite (41) des hydraulischen Stellantriebs (4) über die Druck-zum-Schließen-Rohrleitung (8) und Verbinden der Hochdruckquelle für hydraulisches Fluid (5) mit der zweiten Seite (42) des hydraulischen Stellantriebs (4) über die Druck-zum-Öffnen-Rohrleitung (9) zu bewegen, wobei das Schaltsystem (7) einen vorgespannten pneumatisch betätigten Schalter umfasst, der der Druck-zum-Schließen-Rohrleitung (8) oder der Druck-zum-Öffnen-Rohrleitung (9) zugeordnet ist, in dem der vorgespannte pneumatisch betätigte Schalter (71) eine vorgespannte Position, die dem offenen Zustand der Kopplungsvorrichtung (3) entspricht, und eine Übersteuerungsposition aufweist, die dem geschlossenen Zustand der Kopplungsvorrichtung (3) entspricht, wobei der vorgespannte pneumatisch betätigte Schalter mit der Gasverbindung verbunden oder verbindbar ist und die Übersteuerungsposition durch den Gasdruck in der Gasverbindung aktiviert wird.

## Revendications

1. Ensemble de chargement destiné à transporter un courant de gaz sous pression entre une structure flottante et une autre structure, l'ensemble de chargement comprenant :
- un premier conduit de gaz (1) monté sur la structure flottante ou sur l'autre structure,
- un dispositif d'accouplement (3) qui est commutable entre un état fermé et un état ouvert, dans lequel, à l'état fermé, le dispositif d'accouplement (3) accouple le premier conduit de gaz (1) et un second conduit de gaz (2) montés sur l'autre de la structure flottante ou l'autre structure pour créer un raccordement de gaz entre les premier et second conduits de gaz (1, 2) afin de permettre le transport d'un courant de gaz sous pression entre les deux structures, dans lequel le gaz présent dans le raccordement de gaz présente une pression de gaz et dans lequel, à l'état ouvert, l'accouplement entre les premier et second conduits de gaz (1, 2) est libéré,
- un actionneur hydraulique (4) accouplé mécaniquement au dispositif d'accouplement (3) pour déplacer le dispositif d'accouplement (3) entre les états fermé et ouvert, l'actionneur hydraulique (4) comprenant un premier côté (41) et un second côté (42) ;
- une source de fluide hydraulique haute pression (5) fournissant du fluide hydraulique à l'actionneur hydraulique (4) et un réservoir de fluide hydraulique basse pression (6) recevant le fluide hydraulique de l'actionneur hydraulique (4),
- un système de commutation (7) agencé entre la source de fluide hydraulique haute pression (5), le réservoir de fluide hydraulique basse pression (6) et l'actionneur hydraulique (4), dans lequel le système de commutation (7) comprend une conduite de pression de fermeture (8) raccordée fluidiquement au premier côté (41) et une conduite de pression d'ouverture (9) raccordée fluidiquement au second côté (42), dans lequel le système de commutation (7) est agencé pour déplacer le dispositif d'accouplement (3) à l'état fermé en raccordant la source de fluide hydraulique haute pression (5) au premier côté (41) de l'actionneur hydraulique (4) par le biais de la conduite de pression de fermeture (8) et en raccordant le réservoir de fluide hydraulique basse pression (6) au second côté (42) de l'actionneur hydraulique (4) par le biais de la conduite de pression d'ouverture (9) et dans lequel le système de commutation (7) est agencé pour déplacer le dispositif d'accouplement (3) vers l'état ouvert en raccordant le réservoir de fluide hydraulique basse pression (6) au premier côté (41) de l'actionneur hydraulique (4) par le biais de la conduite de pression de fermeture (8) et en raccordant la source de fluide hydraulique haute pression (5) au second côté (42) de l'actionneur hydraulique (4) par le biais de la conduite de pression d'ouverture (9),
dans lequel le système de commutation (7) comprend un commutateur actionné pneumatiquement sollicité associé à la conduite de pression de fermeture (8) ou à la conduite de pression d'ouverture (9), lequel commutateur actionné pneumatiquement sollicité (71) présente une position sollicitée correspondant à l'état ouvert du dispositif d'accouplement (3) et une position de priorité correspondant à l'état fermé du dispositif d'accouplement (3), la position de priorité étant activée par la pression de gaz dans le raccordement de gaz.

2. Ensemble de chargement selon la revendication 1, dans lequel le commutateur actionné pneumatiquement sollicité (71) est associé à la conduite de pression d'ouverture (9), dans lequel le commutateur actionné pneumatiquement sollicité (71) présente une position sollicitée dans laquelle il raccorde la conduite de pression d'ouverture (9) à la source de fluide hydraulique haute pression (5) et qui présente une position de priorité qui est activée par la pression de gaz dans le raccordement de gaz dans lequel il raccorde la conduite de pression d'ouverture (9) au réservoir de fluide hydraulique basse pression (6).

3. Ensemble de chargement selon la revendication 1, dans lequel le commutateur actionné pneumatiquement sollicité (71) est associé à la conduite de pression de fermeture (8), qui présente une position sollicitée dans laquelle il raccorde la conduite de pression de fermeture (8) au réservoir de fluide hydraulique basse pression (6) et qui présente une position de priorité qui est activée par la pression de gaz dans le raccordement de gaz dans lequel il raccorde la conduite de pression de fermeture (8) à la source de fluide hydraulique haute pression (5).

4. Ensemble de chargement selon l'une quelconque des revendications précédentes, dans lequel le commutateur actionné pneumatiquement sollicité (71) agit sur une seule parmi la conduite de pression de fermeture (8) ou la conduite de pression d'ouverture (9) .

5. Ensemble de chargement selon l'une quelconque des revendications précédentes, dans lequel l'ensemble de chargement comprend un premier commutateur de sélection d'ouverture en cas de panne (72) qui est positionné en série avec le commutateur actionné pneumatiquement sollicité (71).

6. Ensemble de chargement selon l'une quelconque des revendications précédentes, dans lequel le système de commutation (7) comprend un deuxième commutateur de sélection d'ouverture en cas de panne (73), qui est positionné dans l'autre de la conduite de pression de fermeture (8) ou de la conduite de pression d'ouverture (9) à laquelle le commutateur (71) actionné pneumatiquement sollicité est associé.

7. Ensemble de chargement selon la revendication 6, dans lequel le système de commutation (7) comprend un troisième commutateur de sélection d'ouverture en cas de panne (74) positionné en série avec le deuxième commutateur de sélection d'ouverture en cas de panne (73) .

8. Ensemble de chargement selon l'une quelconque des revendications précédentes, dans lequel le système de commutation (7) comprend un premier commutateur de verrouillage à commande hydraulique (75) positionné dans la conduite de pression de fermeture (8), lequel premier commutateur de verrouillage à commande hydraulique (75) présente une position de fermeture sollicitée dans laquelle il ferme la conduite de pression de fermeture (8) et une position d'ouverture à commande hydraulique dans laquelle il ouvre la conduite de pression de fermeture (8), laquelle position d'ouverture à commande hydraulique est activée par pression hydraulique dans le second côté (42) de l'actionneur hydraulique (4), dans lequel le système de commutation (7) comprend un deuxième commutateur de verrouillage à commande hydraulique (76) positionné dans la conduite de pression d'ouverture (9), lequel deuxième commutateur de verrouillage à commande hydraulique (76) présente une position de fermeture sollicitée dans laquelle il ferme la conduite de pression d'ouverture (9) et une position d'ouverture à commande hydraulique dans laquelle il ouvre la conduite de pression d'ouverture (9), laquelle position ouverte à commande hydraulique est activée par pression hydraulique dans le premier côté (41) de l'actionneur hydraulique (4), dans lequel les premier et deuxième commutateurs de verrouillage à commande hydraulique (75, 76) sont pourvus d'un conduit de dérivation (751, 761), chaque conduit de dérivation (751, 761) comprenant une soupape unidirectionnelle (752, 762) permettant au fluide hydraulique de s'écouler respectivement vers les premier et second côtés (41, 42) de l'actionneur hydraulique (4).

9. Ensemble de chargement selon l'une quelconque des revendications précédentes, dans lequel une source secondaire de fluide hydraulique haute pression (1005), une canalisation pneumatique secondaire (1010) et un système de commutation secondaire (1007) sont fournis.

10. Système de commutation (7) destiné à un ensemble de chargement pour transporter un courant de gaz sous pression entre une structure flottante et une autre structure, le système de commutation (7) étant agencé entre une source de fluide hydraulique haute pression (5), un réservoir de fluide hydraulique basse pression (6) et un actionneur hydraulique (4), l'actionneur hydraulique (4) étant raccordé ou raccordable à un dispositif d'accouplement (3), le dispositif d'accouplement (3) étant agencé pour, dans un état fermé, accoupler un premier conduit de gaz (1) et un second conduit de gaz (2) afin de créer un raccordement de gaz entre les premier et second conduits de gaz (1, 2) pour permettre le transport d'un courant de gaz sous pression entre les deux structures, le gaz présent dans le raccordement de gaz ayant une pression de gaz et dans lequel, dans un état ouvert, l'accouplement entre les premier et second conduits de gaz (1, 2) est libéré, dans lequel le système de commutation (7) comprend une conduite de pression de fermeture (8) raccordée fluidiquement à un premier côté (41) de l'actionneur hydraulique (4) et une conduite de pression d'ouverture (9) raccordée fluidiquement à un second côté (42) de l'actionneur hydraulique (4), dans lequel le système de commutation (7) est agencé pour déplacer le dispositif d'accouplement (3) vers l'état fermé en raccordant la source de fluide hydraulique haute pression (5) au premier côté (41) de l'actionneur hydraulique (4) par le biais de la conduite de pression de fermeture (8) et en raccordant le réservoir de fluide hydraulique basse pression (6) au second côté (42) de l'actionneur hydraulique (4) par le biais de la conduite de pression d'ouverture (9) et dans lequel le système de commutation (7) est agencé pour déplacer le dispositif d'accouplement (3) vers l'état ouvert en raccordant le réservoir de fluide hydraulique basse pression (6) au premier côté (41) de l'actionneur hydraulique (4) par le biais de la conduite de pression de fermeture (8) et raccordant la source de fluide hydraulique haute pression (5) au second côté (42) de l'actionneur hydraulique (4) par le biais de la conduite de pression de fermeture (9), dans lequel le système de commutation (7) comprend un commutateur actionné pneumatiquement sollicité associé à la conduite de pression de fermeture (8) ou à la conduite de pression d'ouverture (9), lequel commutateur actionné pneumatiquement sollicité (71) présente une position sollicitée correspondant à l'état ouvert du dispositif d'accouplement (3) et une position de priorité correspondant à l'état fermé du dispositif d'accouplement (3), dans lequel le commutateur actionné pneumatiquement sollicité est raccordé ou raccordable au raccordement de gaz et la position de priorité est activée par la pression de gaz dans le raccordement de gaz.
